# EUROPEAN PATENT APPLICATION

(11) **EP 4 261 808 A1**
(43) Date of publication of application: **18.10.2023**
(21) Application number: 22382346.9
(22) Date of filing: 11.04.2022
(51) Int. Cl.: G09B 9/16

(54) **HYPOXIC AIR GENERATION SYSTEM**

(71) Applicant: Ialtitude Training, S.L., 28942 Fuenlabrada (Madrid) (ES)
(72) Inventor: JORDÁN VINUESA, MANUEL, 28942 FUENLABRADA (MADRID) (ES); ALFONSO TALAVERA, ALEJANDRO, 28942 FUENLABRADA (MADRID) (ES)
(74) Representative: Isern Patentes y Marcas S.L.

(57) **Abstract**

The invention relates to a hypoxic air generation system, comprising a control module, an air generation module, an air treatment module, a mixing module, a sensor module and a means of use; the control module being linked in data communication with the other aforementioned modules and said control module having governance and control ability; the air generation module being mutually linked with the air treatment module for communicating and introducing the captured air; the air treatment module being enabled for cooling and drying the received air and linked to the mixing module for introducing air into said mixing module; the mixing module being enabled for transforming the received air into air with hypoxic conditions and linked to the means of use for introducing said air into said means of use.

## Description

### OBJECT OF THE INVENTION

The object of the present invention application is to register a hypoxic air generation system, which incorporates notable innovations and advantages compared to the techniques used hitherto.

More specifically, the invention proposes the development of a hypoxic air generation system, which, due to the particular arrangement thereof, enables the generation of breathing air under controlled hypoxic conditions, and with follow-up and monitoring of the physiological responses of a user when breathing the same air.

### BACKGROUND OF THE INVENTION

The need to experiment and evaluate the reaction of an organism at a physiological level when exposed to simulated altitude, while also enabling the detection or recognition of hypoxia symptoms, is known in the current state of the art.

Accordingly, it is also known that a controlled mixture of hypoxic and hyperoxic air enables the simulation of altitudes, while also enabling the cognitive response of a user to be evaluated by performing non-scaled cognitive tests.

Current hypoxia systems based on pressure modification involve difficult logistics, limiting environmental conditions, non-specific treatment based on requirements, and possible incidents due to the presence of barotrauma or decompression sickness. At the same time, the current systems do not allow for the flexibility and operational possibilities to be able to develop training sessions with controlled O₂ saturations.

Everything explained above has a significant impact on the aviation sector, for example on pilot training, and especially with regard to improving pilot safety, and more specifically to increasing the operational efficiency of any aviation force by minimising the risks that contribute to aircraft occurrences and minimising the effects of those occurrences. Used effectively, aviation security becomes a force multiplier for air operations.

Aviation security training is essential for both aviation security specialists and all personnel who need to be aware of aviation security during their daily activities.

In addition, it is also essential to standardise the essential points that must be covered in the aeromedical investigation of accidents and/or incidents to facilitate the exchange of information that can be compared between nations.

Every human being has a unique response to altitude stimuli. Knowing it, analysing it and adapting to it are the key to obtaining exceptional results, as well as training and improving the response to depressurisation, unpressurised aircraft, oxygen system failures, cognitive demands, etc.

More specifically, G-force, altitude, stress and circadian rhythms are some of the issues Air Force personnel have to deal with on a daily basis. When a pilot finds him or herself in one of these scenarios, his or her body will require higher oxygen requirements to function properly. Training in oxygen-deficient environments will help elite teams have a better experience and performance, and improve their skills, which are transferable to all types of missions.

Aviation security policy is characterised by the need to reduce the very high cost of loss and damage involved in aircraft occurrences.

The present invention contributes to solving the present problem, since it enables breathing air to be generated under controlled hypoxic conditions, and with follow-up and monitoring of the physiological responses of a user when breathing the same air.

### DESCRIPTION OF THE INVENTION

The present invention has been developed in order to provide a hypoxic air generation system, comprising a control module, an air generation module, an air treatment module, a mixing module, a sensor module and a means of use; the control module being linked in data communication with the other aforementioned modules and said control module having governance and control ability over the other aforementioned modules and with the ability to manage and process data from the other aforementioned modules, and being provided for this purpose with software and a user interface; the air generation module being enabled for capturing air, and at the same time being mutually linked with the air treatment module for communicating and introducing the captured air into said air treatment module; the air treatment module being enabled for cooling and drying the received air, and at the same time being mutually linked with the mixing module for communicating and introducing the air into said mixing module; the mixing module being enabled for transforming the received air into air with hypoxic conditions, and at the same time being mutually linked with the means of use for communicating and introducing said air into said means of use; the means of use being enabled for a user to breathe the air under hypoxic conditions coming out of the mixing module; the sensor module being enabled for real-time follow-up and monitoring of physiological variables of a user breathing air under hypoxic conditions in the means of use.

Preferably, in the hypoxic air generation system, the air generation module comprises a filter arranged and enabled for the captured air to pass therethrough, a compressor arranged and enabled for the captured air to be compressed, and a set of valves arranged and enabled for the captured air to pass at a set pressure.

Preferably, in the hypoxic air generation system, the air treatment module comprises a cooling system, a drying and water separation system, and a moist air regeneration system; wherein the cooling system is enabled for reducing the temperature of a portion of the incoming air received below its dew point temperature; wherein the drying and water separation system is enabled for condensing the water from the cooled air and an outlet of the condensed water from the circuit; wherein the moist air regeneration system is enabled for redirecting the dry air achieved in the drying and water separation system until the reincorporation thereof to the incoming air received and a consequent regulation of the moisture of the resulting total air based on preset values in the user interface of the control module.

Preferably, in the hypoxic air generation system, the mixing module comprises a separation system and a proportional adjustment system; wherein the separation system is enabled for separating at least the oxygen from the incoming air received; wherein the proportional adjustment system is enabled to use at least the separated oxygen so that the consequent resulting and outgoing mixture of air exhibits an oxygen and nitrogen proportion according to preset values in the user interface of the control module.

Alternatively, in the hypoxic air generation system, the separation system is enabled for oxygen separation and generation of a constant flow with a certain percentage of oxygen, and wherein the proportional adjustment system is enabled to redirect said flow of oxygen to the same incoming air, further regulating the proportional relationship thereof with the incoming air, according to preset proportional oxygen and nitrogen values in the resulting outgoing air that are preset in the user interface of the control module.

Alternatively, in the hypoxic air generation system, the separation system is enabled for separating oxygen and nitrogen from the incoming air received; and wherein the proportional adjustment system is enabled to provide the previously separated oxygen and nitrogen with a pressure to each one of them and the subsequent confluence thereof, said partial pressures being suitable so that the consequent resulting and outgoing mixture of air exhibits an oxygen and nitrogen proportion according to preset values in the user interface of the control module.

Additionally, in the hypoxic air generation system, the sensor module is enabled for monitoring a user's partial and regional O₂ saturation, heart rate, inhaled air volume and respiratory rate.

Alternatively, in the hypoxic air generation system, the separation system of the mixing module comprises a molecular sieve.

Alternatively, in the hypoxic air generation system, the separation system of the mixing module comprises a polymer membrane.

Additionally, in the hypoxic air generation system, the means of use is in turn incorporated into a flight simulator.

Additionally, the hypoxic air generation system is in turn integrated into a flight simulator.

Alternatively, in the hypoxic air generation system, the means of use incorporates an anti-asphyxiation system for the user and governed from the control module.

Additionally, in the hypoxic air generation system, the control module is enabled for communication and remote control thereof via HTTP.

Preferably, in the hypoxic air generation system, the means of use comprises a breathing mask for facial use.

Alternatively, in the hypoxic air generation system, the means of use comprises a simulated flight deck.

With the present invention, breathing air is generated under controlled hypoxic conditions, and with follow-up and monitoring of the physiological responses of a user when breathing the same air.

Other features and advantages of the hypoxic air generation system of the invention will become apparent from the description of a preferred, but not exclusive, embodiment, which is illustrated by way of non-limiting example in the accompanying drawings, wherein:

### BRIEF DESCRIPTION OF DRAWINGS

Figure 1.- is a schematic view of a preferred embodiment of the hypoxic air generation system of the present invention.
Figure 2.- is a schematic view of the air generation module of a preferred embodiment of the hypoxic air generation system of the present invention.
Figure 3.- is a schematic view of the air treatment module of a preferred embodiment of the hypoxic air generation system of the present invention.
Figure 4.- is a schematic view of the mixing module of a preferred embodiment of the hypoxic air generation system of the present invention.

### DESCRIPTION OF A PREFERRED EMBODIMENT

The hypoxic air generation system of the invention is enabled and designed mainly for simulating and training users in breathing air under hypoxic conditions, and with great flexibility of operating possibilities, and control and follow-up of their physiological responses.

For example, a very useful use of the hypoxic air generation system of the invention may be training under hypoxic normobaric and altitude simulation conditions for pilots in their flight decks, and with real-time control of physiological response variables of the same user or pilot.

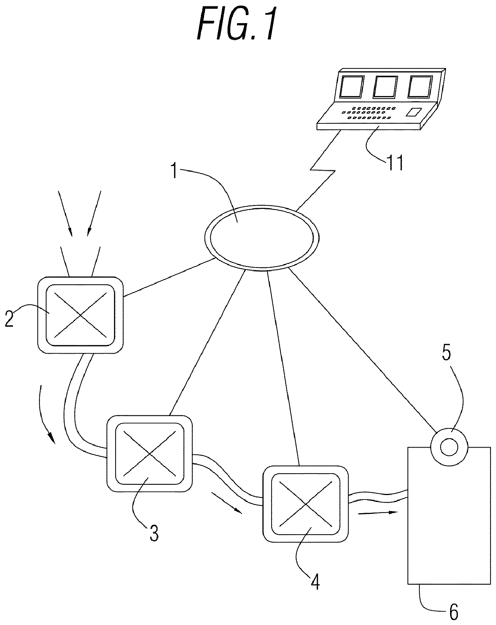

Accordingly, and as can be seen in the general and schematic representation of Figure 1, the hypoxic air generation system of the invention comprises a control module 1, an air generation module 2, an air treatment module 3, a mixing module 4, a sensor module 5 and a means of use 6. This means of use 6 is related to the specific use of the hypoxic air generation system of the invention.

In this preferred embodiment, the means of use 6 comprises an air breathing mask of a pilot in his or her flight deck. In other preferred embodiments, the means of use 6 could comprise an isolated simulated flight deck, for example, according to the different options of use selected.

The control module 1 is linked in data communication and has the ability to govern and control the other aforementioned modules, as well as the ability to manage and process data from them.

To this end, the control module 1 is equipped with software and a user interface 11, wherein it is therefore possible to introduce and preset the control variables and the values of the parameters specified and desired, for example, moisture values and oxygen proportion in the hypoxic air finally generated, as well as obtain reception and display of the different results in the follow-up and monitoring of the physiological response of the user or pilot.

Furthermore, the air generation module 2 is enabled for capturing ambient air, as indicated by the arrows in Figure 1, and is at the same time mutually linked with the air treatment module 3 for communicating and introducing said captured air towards the air treatment module 3 under preset filtering and pressure conditions, as also indicated by the directional arrows in Figure 1.

The air treatment module 3 is enabled for cooling and drying the incoming air received from the air generation module 2, providing a suitable moisture proportion to the finally outgoing air according to preset conditions from the interface 11 of the control module 1. At the same time, it is mutually linked with the mixing module 4 for communicating and introducing the outgoing air towards said mixing module 4, as also indicated by the directional arrows in Figure 1.

The mixing module 4 is enabled for transforming the received air into air with preset hypoxic conditions from the interface 11 of the control module 1.

Finally, the sensor module 5 is enabled for real-time follow-up and monitoring of physiological variables of a user who is breathing the air treated by the means of use 6, and also for communicating data representative of said monitoring to the control module 1, and the display thereof by means of the interface 11 thereof.

In accordance with the general description explained above, the hypoxic air generation system of the invention enables multiple possible preferred embodiments, also according to the multiple possibilities of use thereof.

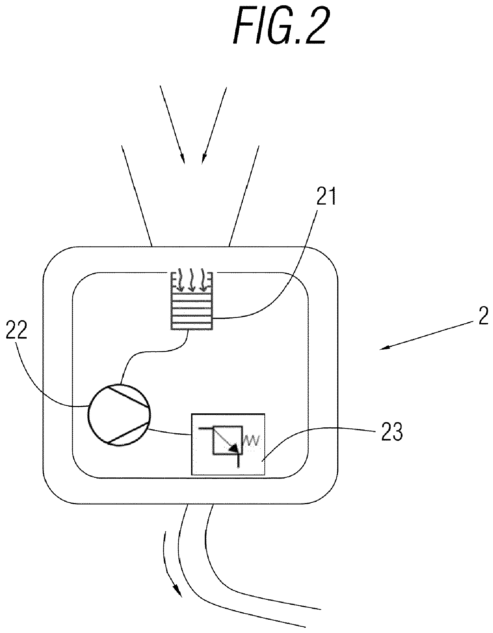

In this sense, as schematically represented in Figure 2, the air generation module 2 comprises a filter 21 arranged and enabled for the captured air to pass therethrough, and thus free it from possible impurities or environmental dust. In this preferred embodiment, it also has a compressor 22 equipped with a piston in a cylinder for compressing the air, arranged and enabled in the path of the captured air in order to provide a required pressure, as well as a set of valves 23 arranged and enabled for passage of the captured air fulfilling a preset set pressure.

The different elements and mechanisms of the air generation module 2 are regulated in the operation thereof from the control module 1, in accordance with preset values from the user interface 11 thereof.

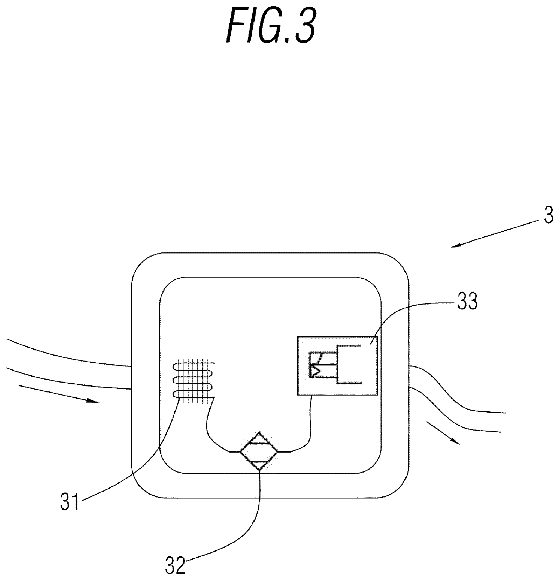

Furthermore, the air treatment module 3, as schematically represented in Figure 3, comprises a cooling system 31, a drying and water separation system 32 and a moist air regeneration system 33, in order to finally confer a suitable moisture proportion to the circulating air used, in accordance with preset values from the user interface 11 of the control module 1.

Said cooling system 31 is enabled for reducing the temperature of a portion of the received air below the dew temperature, so that subsequently in the drying and water separation system 32, a condensation of the water of said cooled air and the subsequent outlet of said condensed water from the circuit occur.

This dry air achieved is redirected by means of the moist air regeneration system 33 until the reincorporation thereof to the received air, which involves a consequent regulation of the moisture of the resulting total air. Said moist air regeneration system 33 adjusts the dry air proportion reincorporated to the received air, in order to achieve moisture values in the resulting air preset in the user interface 11 of the control module 1. The operation of the air treatment module 3 by means of the moist air regeneration system 33 has the advantage that said regeneration is performed continuously throughout the entire operation and thus does not require downtime.

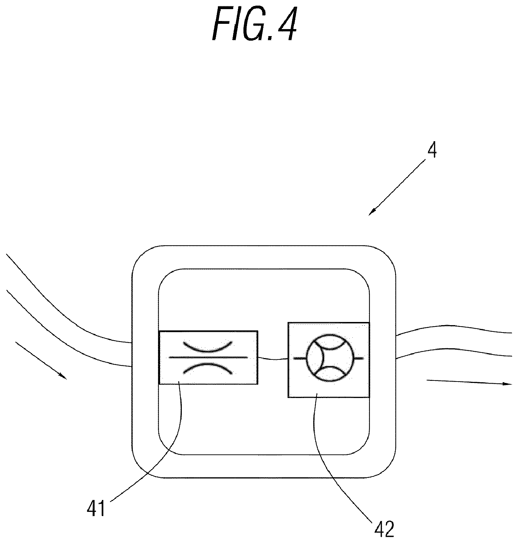

The air then passes to the mixing module 4. As shown schematically in Figure 4, said mixing module 4 comprises a separation system 41 and a proportional adjustment system 42.

The separation system 41 carries out an extraction of at least oxygen from the incoming air received. Next, the proportional adjustment system 42 uses this separated oxygen so that the resulting outgoing air exhibits an oxygen and nitrogen proportion according to preset values in the user interface 11 of the control module 1, which will ultimately enable a simulation of an altitude during the training and study of the breathing of flight pilots in this preferred use of the hypoxic air generation system of the invention.

In this preferred embodiment, the separation system 41 of the mixing module 4 comprises a molecular sieve, suitable for separating oxygen and nitrogen from the incoming air.

In other preferred embodiments, the separation system 41 of the mixing module 4 may comprise, for example, a polymer membrane or other suitable means for this purpose.

In this preferred embodiment, air is introduced into the molecular sieve of the separation system 41, which generates a constant oxygen flow rate of 17 I/min with an oxygen concentration of 11%.

By means of the proportional adjustment system 42, this oxygen flow is reintroduced again into the incoming air, further regulating the proportional ratio thereof with said incoming air, in order to obtain the resulting oxygen concentration in the air according to preset values in the user interface 11 of the control module 1.

In other preferred embodiments, the separation system 41 is enabled to separate oxygen and nitrogen from the received air by means of the molecular sieve. Next, the proportional adjustment system 42 provides the previously separated oxygen and nitrogen with a pressure to each of them, with subsequent mixing of both. Said partial pressures supplied to each one are suitable so that the subsequent resulting mixture exhibits an oxygen and nitrogen proportion according to preset values in the user interface 11 of the control module 1.

Finally, the resulting air, already under hypoxic conditions, is inhaled by the pilot in the mask of the means of use 6, with a sufficient flow for normal breathing, as well as for performing respiratory manoeuvres with an anti-asphyxiation system that guarantees that air is always available regardless of the flow supplied to the pilot. This anti-asphyxiation system has an automatic connection to the means of use 6 or personal flight equipment, enabling any official mask and trachea to be immediately connected to the anti-asphyxiation system.

The hypoxic air generation system of the invention also includes a sensor module 5. In this preferred embodiment, said sensor module 5 is enabled to perform monitoring of the partial and regional O₂ saturation, the heart rate, the inhaled air volume, and the respiratory rate of the user who is breathing the treated air through the means of use 6, in this case a flight pilot breathing with a mask, for his correct training and safety in order to thus appreciate his evolution and consequences after breathing the treated air. It is possible to display the results of the sensor module 5 on the interface 11 of the control module 1.

This sensor module 5 manages all the physical elements or medical-grade sensors, monitoring the pilot's physiology and providing this data in real time to the control module 1 and the display thereof on the interface 11.

The sensor module 5 is equipped with software architecture that centralises the capture of information, processing and management of the data coming from the different sensors. Medical sensors have been integrated with low-power plug-and-play adaptability based on highly responsive, accurate and reliable performance for all types of users.

All signals are transformed and calculated by means of algorithms to make them reliable, even when the user's signals are not, due to electronic and logical processing using software. This processing separates the real signal to analyse interference and weak signals, providing accurate measurements regardless of the user (complexion, body temperature, skin colour, etc.) or challenging condition (validated for use in difficult conditions such as movement and low perfusion).

All the sensors of the sensor module 5 have been included, taking into account usability, comfort, and versatility in different types of situations to avoid loss of attention by the user, as well as to guarantee the placement and removal thereof.

The control module 1 manages all the physical elements, controls the physiology of the pilot, interacts with the instructor by means of the interface 11 and can communicate with a flight simulator. The training, accuracy, and safety of all the elements of the hypoxic air generation system of the invention and the people who interact and intervene depend on it.

The control module 1 incorporates software, so that by means of the interface 11, the flight altitude of said flight simulator is simulated automatically if the instructor so decides.

The control module 1 and its software is developed under standard architectures, which enables the scaling, updating and securisation thereof based on the specific requirements of the user. The architecture and connectors developed enable new medical or physiological sensors to be coupled through the sensor module 5. Similarly, the use of communication standards enables the control module 1 to be integrated with any type of remote system (flight simulator, virtual reality glasses, etc.) to orchestrate this new integration in a simple and agile manner.

The control module 1 and its software enable remote control thereof via HTTP, which will enable it to be viewed from any browser that accesses the same network where it is connected without having to open or run any other additional remote control software. This multi-post control ability enables the training to be observed remotely by different units in order to know training and abilities without the need for qualified personnel to travel, as well as being able to offer technical support from the manufacturer during the training and support phase of the hypoxic air generation system of the invention.

The control module 1 and its software also enable centralising the information in the manufacturer's repository where different units can be managed, as well as the training performed for a remote and historical evaluation where reports on the work performed can be prepared in the future. Access to information from the repository is based on roles and permissions.

Within the user interface 11 of the control module 1 and focusing on the monitoring of all the physical elements intervening in the hypoxic air generation system of the invention, panels for real-time monitoring of the digital signals of the different modules can be found. There is also a panel for controlling and monitoring human connectivity through the sensor module 5. Lastly, we will be able to access the monitoring panel which monitors connectivity with a flight simulator, as well as the exchange of messages thereof.

In accordance with the foregoing, the hypoxic air generation system of the invention enables hypoxic training to be developed with real-time control of the physiological variables involved and the cognitive response emitted in a simulated flight situation.

The hypoxic air generation system of the invention can be used in different types of training:
Practical Training and Demonstration Trainings. It consists of a flight profile for performing a brief practical demonstration of a hypoxic situation, wherein the pilot is subjected to changes in altitude and events are triggered based on his or her physiological response. These events may involve automatic altitude changes, question-and-answer assessment, and detection of symptoms identified by the pilot and noted by the instructor.
Training under induced and controlled hypoxia. It consists of an initial flight profile that is indefinite in time, the parameters of which are managed, added, modified or eliminated by the instructor in order to induce hypoxia in the pilot and maintain oxygenation levels between upper and lower limits and thus verify his or her response based on the stress contained between the limits. This way of working requires high precision and orchestration of logical (software), electronic and mechanical elements from the process of capturing the ambient air to the inlet and observation in the pilot at the cellular level, since the response in said cellular oxygenation is highly variable and these levels must be induced, maintained and controlled throughout the training. During the process, the instructor is assisted and has all the control elements, alarms and colours to guide the operation in a simple and precise manner. The hypoxic air generation system of the invention has a high degree of refinement in usability and user experience to make this training a powerful evaluator. For this, the hypoxic air generation system of the invention has a biofeedback system for controlling arterial and regional oxygenation and heart rate readings, the data of which are centralised and provided in real time from the sensor module 5 and thus be able to perform training, facilitate decision-making and ensure safety. All physiological data are displayed in real time and historically, adjusting to the time scale thereof.
Hypoxic training with customisable flight profiles per unit, aircraft or mission. It consists of a personalised profile configurator based on the type of pilots and missions. This configurator enables any type of profile to be defined, based on altitudes, times, cellular oxygenation limits, events, actions and experiences. Additionally, the configured profile can be modified in real time once the training has started in order to establish new parameters without stopping the mission. This forces the interface 11 of the control module 1 to reconfigure itself in real time to display data resolution and time scales of the complete training at all times. For this, the sensor module 5 has a biofeedback system for controlling arterial and regional oxygenation and heart rate readings, the data of which are centralised and provided in real time from the sensor module 5 and thus be able to perform training, facilitate decision-making and ensure safety. All physiological data are displayed in real time and historically, adjusting to the time scale thereof.
Training in recognition of cabin depressurisation or failures in the aircraft's oxygenation systems. It consists of flight profiles where a simulation of situations involving said failures is established, for which the system makes altitude changes defined by the instructor to simulate these situations at high or slow speed with the aim of sticking to real flight situations and checking if the pilot detects the symptoms, which in turn will be noted by the instructor in order to evaluate the pilot. For this, the system has a biofeedback system for controlling arterial and regional oxygenation and heart rate readings, the data of which are centralised and provided in real time from the sensor module 5 and thus be able to perform training, facilitate taking decisions and ensure safety. All physiological data are displayed in real time and historically, adjusting to the time scale thereof.
Hypoxic training and analysis and breathing pattern. It consists of flight profiles with hypoxic induction so that once it is achieved, previously trained or learned respiratory manoeuvres can be executed with the aim of training the pilot to get out of the hypoxic situation without losing control of the mission. For this, the system has a biofeedback system for controlling the breathing pattern, the data of which are centralised and provided in real time from the sensor module 5 and thus be able to correlate the immediate physiological response with the instructions of the instructor to the pilot. All physiological data are displayed in real time and historically, adjusting to the time scale thereof.
Training in real-time decision-making and abilities. It consists of a configurator of events by type of pilots and missions that can be evaluated and made available to the instructor during training, with the aim of evaluating actions temporarily, physiologically and subjectively, being able to analyse these responses together with the pilot and being able to establish a plan of action and future improvement training given this type of situation.
Hypoxic training with guided altitude from the aircraft controls. It consists of training based on the altitude provided in the interface 11 of the control module 1 of the hypoxic air generation system of the invention. The real altitude of the simulator is provided through the interface 11 of the control module 1. The altitude breathed during training changes depending on the manoeuvre that the pilot performs with the aircraft and the entire system will respond immediately and accurately at said altitude. During training, the instructor can evaluate the pilot before different events, as well as record situations that are to be analysed after training. This communication interface 11 enables starting, stopping and pausing the entire system in order to have a perfect orchestration between the very hypoxic air generation system of the invention and the remote system (flight simulator).
Personalised training under intermittent hypoxia. It consists of a configurator and assistant for intermittent hypoxic training based on the individual physiological response of each pilot, which will enable the activation and deactivation of HIF1, achieving physiological adaptations that will improve concentration, decision-making, sleep improvement and improved physical performance. During training, the pilot constantly receives instructions to remove or put on the mask based on his or her physiological response. During the process, the hypoxic air generation system of the invention ensures that the hypoxic load received by the user is adjusted to the ability thereof in order to gradually accumulate hypoxic load and thus achieve the improvements described above. The hypoxic air generation system of the invention enables subsequent analysis and historical viewing of said training sessions where objective improvements based on the physiological variables provided by the hypoxic air generation system of the invention can be checked.

The hypoxic air generation system of the invention represents a conceptual change from "safety training" in experiential/passive-type scenarios to "operability training" in experiential/active-type scenarios. Flight personnel not only experience, but also train to increase their effectiveness in real operational intervention situations.

With the hypoxic air generation system of the invention, the training of flight personnel can be regulated, in order to ensure safety and efficiency in the operation of military aircraft and enables systems/platforms to be implemented for flight-hypoxia simulation, cognitive and executive functions.

In this sense, the current trend is to train in simulated flight scenarios with CADO (Combined Altitude and Depleted Oxygen) or ROBD (Reduced Oxygen Breathing Device) systems. A differential system for qualitative improvement in the concept of combined training, safety and improvement of fighting ability compared to traditional systems with less flexibility.

The hypoxic air generation system of the invention also enables the adaptation thereof to the minimum standards of aeromedical training required for flight personnel in order to promote safety and efficiency in the operation of military aircraft and enable the crew of a NATO nation to fly the equivalent aircraft of another nation without additional aeromedical training. This standard covers the training requirements to operate with night vision devices or in a CBRN environment.

Therefore, the hypoxic air generation system of the invention contributes to standardising the minimum aviation medicine training for flight surgeons in order to promote the safety and efficiency in the operation of military air force.

The hypoxic air generation system of the invention also contributes to standardising the essential points that must be covered in the aeromedical investigation of accidents and/or incidents to facilitate the exchange of information that can be compared between nations.

The hypoxic air generation system of the invention complies with the NATO listing system that has been developed for aerospace training offering improvements in technical skills and physiological performance. A technology compatible with different types of aircraft (fixed wing and rotary wing), for training under the different hypoxic conditions to which personnel are exposed. The main priority of this technology has been military performance and safety, and thus the hypoxic air generation system of the invention is a flight trainer designed to provide air force teams with advanced technical and physiological qualities.

Due to the hypoxic air generation system of the invention, it is possible to analyse personalised flight profiles adapted to each level, as well as evaluate and improve the physical and mental abilities of elite teams, making it possible and within the reach of military units due to this training system.

The hypoxic air generation system of the invention does not require "external" infrastructure to operate, since it comprises all the necessary elements to operate autonomously in any type of environment. The low volume and weight, as well as the integrated concept thereof for deployment, facilitates its use for any type of service.

The hypoxic air generation system of the invention has been developed in a modular way to be able to be scaled and integrated into any type of aircraft, mask and/or environment, consolidating itself as a great tool for the performance of pilots and military personnel. Due to its standard communication interface 11, it can be effortlessly integrated into a simulation system of any organisation.

The details, shapes, dimensions and other accessory elements, as well as the materials used to manufacture the hypoxic air generation system of the invention, may be suitably substituted for others which are technically equivalent and do not diverge from the essential nature of the invention, nor the scope defined by the claims included below.

## Claims

1. A hypoxic air generation system, **characterised in that** it comprises a control module (1), an air generation module (2), an air treatment module (3), a mixing module (4), a sensor module (5) and a means of use (6); the control module (1) being linked in data communication with the other aforementioned modules and said control module (1) having governance and control ability over the other aforementioned modules and with the ability to manage and process data from the other aforementioned modules, and being provided for this purpose with software and a user interface (11); the air generation module (2) being enabled for capturing air, and at the same time being mutually linked with the air treatment module (3) for communicating and introducing the captured air into said air treatment module (3); the air treatment module (3) being enabled for cooling and drying the received air, and at the same time being mutually linked with the mixing module (4) for communicating and introducing the air into said mixing module (4); the mixing module (4) being enabled for transforming the received air into air with hypoxic conditions, and at the same time being mutually linked with the means of use (6) for communicating and introducing said air into said means of use (6); the means of use (6) being enabled for a user to breathe the air under hypoxic conditions coming out of the mixing module (4); the sensor module (5) being enabled for real-time follow-up and monitoring of physiological variables of a user breathing air under hypoxic conditions in the means of use (6).

2. The hypoxic air generation system according to claim 1, wherein the air generation module (2) comprises a filter (21) arranged and enabled for the captured air to pass therethrough, a compressor (22) arranged and enabled for the captured air to be compressed, and a set of valves (23) arranged and enabled for the captured air to pass at a set pressure.

3. The hypoxic air generation system according to any of the preceding claims, wherein the air treatment module (3) comprises a cooling system (31), a drying and water separation system (32), and a moist air regeneration system (33); wherein the cooling system (31) is enabled for reducing the temperature of a portion of the incoming air received below its dew point temperature; wherein the drying and water separation system (32) is enabled for condensing the water from the cooled air and an outlet of the condensed water from the circuit; wherein the moist air regeneration system (33) is enabled for redirecting the dry air achieved in the drying and water separation system (32) until the reincorporation thereof to the incoming air received and a consequent regulation of the moisture of the resulting total air based on preset values in the user interface (11) of the control module (11).

4. The hypoxic air generation system according to any of the preceding claims, wherein the mixing module (4) comprises a separation system (41) and a proportional adjustment system (42); wherein the separation system (41) is enabled for separating at least the oxygen from the incoming air received; wherein the proportional adjustment system (42) is enabled to use at least the separated oxygen so that the consequent resulting and outgoing mixture of air exhibits an oxygen and nitrogen proportion according to preset values in the user interface (11) of the control module (1).

5. The hypoxic air generation system according to claim 4, wherein the separation system (41) is enabled for oxygen separation and generation of a constant flow with a certain percentage of oxygen, and wherein the proportional adjustment system (42) is enabled to redirect said flow of oxygen to the same incoming air, further regulating the proportional relationship thereof with the incoming air, according to preset proportional oxygen and nitrogen values in the resulting outgoing air that are preset in the user interface (11) of the control module (1).

6. The hypoxic air generation system according to claim 4, wherein the separation system (41) is enabled for separating oxygen and nitrogen from the incoming air received; and wherein the proportional adjustment system (42) is enabled to provide the previous separated oxygen and nitrogen with a pressure to each one of them and the subsequent confluence thereof, said partial pressures being suitable so that the consequent resulting and outgoing mixture of air exhibits an oxygen and nitrogen proportion according to preset values in the user interface (11) of the control module (1).

7. The hypoxic air generation system according to any of the preceding claims, wherein the sensor module (5) is enabled for monitoring a user's partial and regional O₂ saturation, heart rate, inhaled air volume and respiratory rate.

8. The hypoxic air generation system according to claim 4 or 5 or 6, wherein the separation system (41) of the mixing module (4) comprises a molecular sieve.

9. The hypoxic air generation system according to claim 4 or 5 or 6, wherein the separation system (41) of the mixing module (4) comprises a polymer membrane.

10. The hypoxic air generation system according to any of the preceding claims, wherein the means of use (6) is in turn incorporated into a flight simulator.

11. The hypoxic air generation system according to any of the preceding claims, which is in turn integrated into a flight simulator.

12. The hypoxic air generation system according to any of the preceding claims, wherein the means of use (6) incorporates an anti-asphyxiation system for the user and governed from the control module (1).

13. The hypoxic air generation system according to any of the preceding claims, wherein the control module (1) is enabled for communication and remote control thereof via HTTP.

14. The hypoxic air generation system according to any of the preceding claims, wherein the means of use (6) comprises a breathing mask for facial use.

15. The hypoxic air generation system according to any of the preceding claims, wherein the means of use (6) comprises a simulated flight deck.
